(19)

Europäisches
Patentamt
European
Patent Office
Office européen
des brevets

(11) **EP 1 944 994 A1**

(12) **EUROPEAN PATENT APPLICATION**

(43) Date of publication:
**16.07.2008 Bulletin 2008/29**

(51) Int Cl.:
*H04Q 7/38* (2006.01)

(21) Application number: **08000402.1**

(22) Date of filing: **10.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **10.01.2007 GB 0700469**

(71) Applicant: **Samsung Electronics Co., Ltd.**
**Suwon-si, Gyeonggi-do (KR)**

(72) Inventors:
• **Jeong, Kyeong-In**
**Suwun-si**
**Gyeonggi-do (KR)**

• **Van Lieshout, Gert Jan**
**Suwun-si**
**Gyeonggi-do (KR)**
• **Van der Velde, Himke**
**Suwun-si**
**Gyeonggi-do (KR)**

(74) Representative: **Lang, Johannes et al**
**Bardehle Pagenberg Dost**
**Altenburg Geissler Isenbruck**
**Postfach 86 06 20**
**81633 München (DE)**

(54) **Wireless communication system transmitting neighboring cell information**

(57)    A wireless communication system in which neighbouring cell information is transmitted by the network to a mobile station is disclosed, wherein the neighbouring cell information includes sets of parameters, each set of parameters being applicable to several neighbouring cells. The neighbouring cell information may also include applicability information which specifies the rules the mobile station is to apply to determine which parameter set is applicable for a particular neighbouring cell.

```
┌──────────────┐                    ┌──────────────┐
│     U E      │                    │     eNB      │
└──────────────┘                    └──────────────┘
        │                                   │
        │  1: System information            │
        │◄──────────────────────────────────│
        │  >Neighbouring cell information
        │  >>Intra frequency cell list
        │  >>Inter frequency cell list
        │  >>Inter RAT cell list
```

FIG.1

EP 1 944 994 A1

**Description**

**BACKGROUND OF THE INVENTION**

1. Field of the Invention

This invention relates to the broadcasting of neighbouring cell information in a wireless communication system. The invention is generally related to the application of the Evolved Universal Terrestrial Radio Access (E-UTRA).

2. Description of the Related Art

Some E-UTRA aspects that have been agreed on and are relevant background for this invention are as follows:

- The User Equipment (UE) considers the neighbouring cells broadcast by the serving cell as candidates for cell re-selection. The use of cells not listed in system information is FFS(For Further Study);
- In principle, cell re-selection parameters are applicable for all UEs in a cell, but it is possible to configure specific parameters for groups of UEs or even for individual UEs;
- The cell re-selection topology (hierarchical or non hierarchical) will be indicated in system information;
- Some measurement/mobility information may be valid across multiple cells (FFS);
- A UE in idle mode shall follow the measurement parameters defined for cell re-selection broadcast by the serving cell. The use of dedicated measurement control messages for idle mode UEs is FFS; and
- When Radio Resource Control (RRC) connected, the E-UTRAN applies dedicated messages to control the measurements to be performed by the UE, i.e., as in UMTS.

Further details on the above are available in 3$^{rd}$ Generation Partnership Project (3GPP) TS 25.331: "Evolved Universal Terrestrial Radio Access (E-UTRA) and Evolved Universal Terrestrial Radio Access Network (E-UTRAN); Overall description; Stage 2 (Release 8). This document includes the following statement: "In RRC_CONNECTED state, a UE shall follow the measurement configurations specified by RRC directed from the E-UTRAN (e.g., as in UTRAN MEASUREMENT_CONTROL".

When in the idle mode, the mobility is UE controlled, i.e., it is the UE that decides which cell to select. However, the network is able to influence the selection process in the UE by means of cell re-selection parameters.

The network can not only indicate the neighboring cells that the UE should consider, it can also specify which quantities the UE shall measure, control when the UE is required to start measuring and provide parameters to be used when ranking/ comparing the measured cells (based on the measurement results). In the following, these mobility control parameters are referred to as neighboring cell information.

Whenever a new Radio Access Technology (RAT) is introduced for which good mobility performance is to be supported, the size of the neighbouring cell information increases (i.e., for every new RAT additional parameters are introduced). Initial estimates have shown that for E-UTRA, the size of the neighbouring cell information may be in the order of 5000 bits (see R2-062869: "Organisation and Overhead of System Information"). The neighbouring cell information needs to be repeated frequently to achieve good mobility performance. Furthermore, as for any other system information, it should be possible to receive the information at the cell edge. Finally, each cell may need to be indicated in several different RATs. As a result, neighbouring cell information is costly. Signalling optimizations are hence desirable especially for cells with limited bandwidth.

When in connected mode, the mobility is controlled by the network, i.e., it is the network that decides which cell the UE shall connect to, possibly based on measurement results provided by the UE and/or the enhanced Node B (eNB). The network also controls the measurements performed and reported by the UE, via measurement control parameters.

The measurement control information could be broadcast as part of the neighbouring cell system information. However, the network may also apply dedicated messages to provide the concerned parameters.

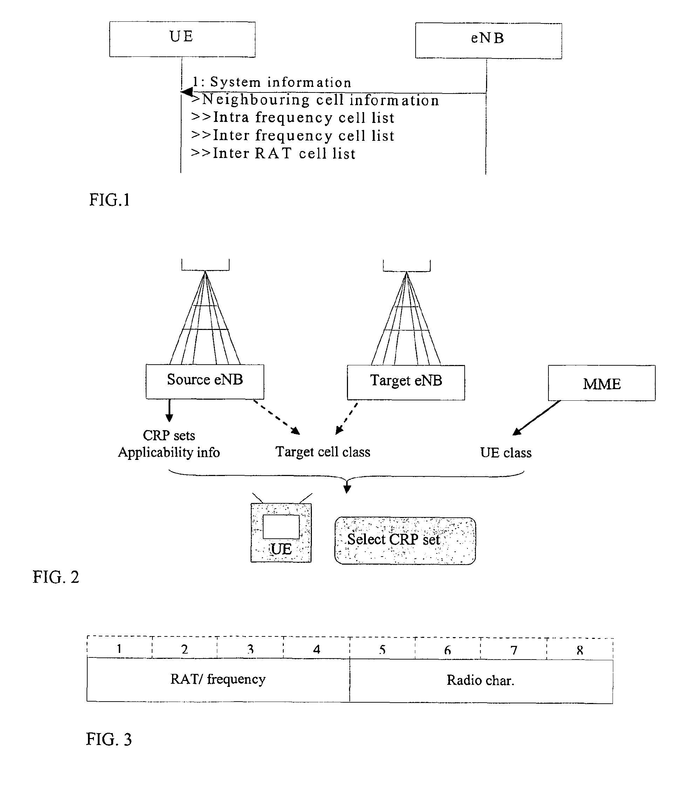

In UMTS, the neighbouring cell information is included in the System Information Block (SIB) type 11 and SIB type 12, which include the additions/ modifications to be used in connected mode. Recently, SIB type 11 bis(inter meeting between regular meetings, come from numbering of standard meetings, for example, the number of regular meeting is numbered as 3GPPRAN2#61, and inter meeting as 3GPPRAN2#61-bis) has been defined as an extension of SIB type 11, since it was found that it may not be possible to fit the maximum possible number of neighbouring cells (32 intra frequency cells+ 32 inter frequency cells + 32 inter RAT cells) in SIB 11. FIG. 1 shows the broadcasting of neighbouring cell information.

In UMTS, one of the common signalling optimisations is to include parameters only if they differ compared to reference. This reference could either be a *default* value that is specified in the standard or another occurrence of the same information element that appears in the same message. This type of signalling optimisation is used for the neighbouring cell information, as shown by the following extract from 3GPP TS 25.331: "Radio Resource Control (RRC); Protocol Specification

10.3.7.13 Inter-frequency cell info list

Contains the information for the list of measurement objects for an inter-frequency measurement.

| Information Element/ Group name | Need | Multi | Type and reference | Semantics description |
|---|---|---|---|---|
| CHOICE *Inter-frequency cell removal* | OP | | | |
| >Remove all inter-frequency cells | | | | No data |
| >Remove some inter-frequency cells | | | | |
| >>Removed inter-frequency cells | MP | 1 .. <maxC ellMea s> | | |
| >>>Inter- frequency cell id | MP | | Integer(0 .. <maxCell Meas>-1) | |
| >No inter-frequency cells removed | | | | No data |
| New inter-frequency cells | OP | 1 to <maxC ellMeas> | | |
| >Inter-frequency cell id | MD | | Integer(0 .. <maxCell Meas>-1) | |
| >Frequency info | MD | | Frequency info 10.3.6.36 | Default value is the value of the previous "frequency info" in the list. NOTE: The first occurrence is then MP. |
| >Cell info | MP | | Cell info 10.3.7.2 | |
| Cells for measurement | CV-*BCHopt* | 1 to <maxC ellMea s> | | |
| >Inter-frequency cell id | MP | | Integer(0 .. <maxCell Meas>-1) | |

| Condition | Explanation |
|---|---|
| *BCHopt* | This IE is not needed when sent in SYSTEM INFORMATION. Otherwise, the IE is Optional |

In R2-062869: "Organisation and Overhead of System Information", it has been suggested to apply the Single Frequency Network (SFN) mode of operation for the neighbouring cell information. This mode of operation may be used when the same information is to be transmitted by a multiple of cells. In the SFN mode of operation, the participating eNBs simultaneously transmit identical contents via the same radio resources, i.e., via the same Physical time/frequency Resource Blocks (PRBs) as defined in E-UTRA. When SFN mode of operation is used, UEs combine transmissions from different cells without being aware of the different transmission sources (i.e., to the UE it seems as if there is a transmission from one cell).

The benefit from using SFN can be significant and stems from the reduction of the Signal-to-Noise Ratio (SNR) which results from the fact that all cells in the area apply the same radio resources to transmit the same content, therefore the concerned cells do not generate inter cell interference. SFN mode of operation requires that the participating eNBs are tightly synchronised.

A number of concerns have been raised against the use of SFN for neighbouring cell information such as that SFN can not be used for the majority of the neighbouring cell information because it is cell specific andSFN mode of operation is complex in that it requires tight network coordination

It has also been proposed to completely remove the neighbouring cell information (see R2-063305 "Reduction of Neighbor Cell List Information sent to UE"). It is claimed that the neighbouring cell information is used only to validate the cell's identity, and that this is done only after having performed the mobility. A number of concerns have been raised against this complete removal. For example, the neighbouring information improves the cell search performance, therefore removal will reduce cell re-selection performance. Also, there is concern that the neighbouring cell information is needed to support the mobility drivers that have been identified by operators.

## SUMMARY OF THE INVENTION

The present invention concerns mobility control parameters that are broadcast, that is, information provided via system information messages, and focuses on cell re-selection parameters, i.e., parameters used by the UEs in idle mode, such as quality offsets, maximum transmit power and quality thresholds. The present invention also operates in connected mode, as it is important to ensure that the mobility behaviors in the idle and connected modes are consistent, because a UE may frequently move between these states.

The present invention provides the following:

1. Neighboring cell information is organized to include sets of parameters that are applicable to several neighbouring cells. The neighbouring cell information includes Applicability information which specifies the rules the UE shall apply to determine which parameter set is applicable for a particular neighbour. This approach is mainly applicable to the Cell Re-selection Parameters (CRP), i.e., the parameters used by UEs in idle mode. However, use of the same concept for other neighbouring cell parameters is not excluded. The Applicability information or 'CRP applicability information' is specified in terms of characteristics of the target cell, i.e., the (cell class) and the UE (i.e., the UE class). The cell class of the target cell could either be broadcast by the target cell or by the source cell, i.e., as part of the neighbouring cell information, and the network assigns the UE class upon initial transition from detach to active and may update the parameter whenever it is needed.

2. The basic mechanism may be enhanced as follows. To facilitate the SFN transmission, the CRP applicability information needs to be specified in a manner applicable to several cells. This is achieved by specifying the applicability to be also dependent on the cell class of the source cell. To avoid that the standards need to specify the possible structures of the cell class parameter while allowing different properties to be reflected in this parameter, the present invention allows the use of multiple successive operands in the CRP applicability information,. and to support a connected mode behavior consistent with the idle mode behavior, the eNB is made aware of the cell class (by regular Operation and Maintenance Centre OMC procedure) and the UE class (indicated by the Mobility Management Entity MME upon connection establishment and upon modification, forwarded by the source to target eNB upon handover).

The mechanism of the present invention has the following advantages in that the mechanism is very flexible and can be used to implement a wide variety of mobility strategies; the signalling overhead is limited, i.e., much smaller than the current practice; andthe presentation may facilitate the use of the SFN transmission.

The main idea of the present inventionis to organize the neighbouring cell information in an alternative manner, aiming to provide information for mobility scenarios, instead of providing the information for each individual neighbouring cell. This is mainly applicable to the Cell Re-selection Parameters (CRP), i.e., the parameters used by UEs in idle mode. The following description focuses on these parameters, and accordingly the prefix CRP is used for some of the terms. However, the use of the same concept for other neighbouring cell parameters is not excluded.

The starting point is that there is no need to specify the cell re-selection parameters for each neighbouring cell, because for many neighbors the same parameters apply. For example, one set of cell re-selection parameters may apply for all intra-frequency neighbours, while another set of cell re-selection parameters applies for all inter-frequency neighbours on frequency f2. Some cells may require a specific set of cell re-selection parameters. However, this is considered to be an infrequent case.

In other words, there is one set of cell re-selection parameters (or CRP set) for the neighbouring cells with similar characteristics. The same re-selection characteristics could be modelled by means of a cell class. In case the neighbouring cell info includes an entry for each individual neighbouring cell, the cell class could be included in the neighbouring cell information. Alternatively, the UE could acquire the Cell call information from the target cell.

As mentioned before, RAN2(RAN: Radio Access Network) has agreed on a number of mobility drivers for LTE service including UE-specific controls of Subscription based control and Service dependent control'. For example, an operator may prefer to handle roamers on 2G. Likewise, an operator may wish to handle a speech only UE preferably on 2G. One way to model the UE-specific controls is by means of a UE class. This UE class would be assigned by the network upon initial transition from detach to active. The UE class value may be updated whenever needed, e.g., when the UE moves upon TA (Tracking Area) update.

In accordance with the present invention, the set of cell re-selection parameters that applies for a given UE now depends on the cell class of the concerned neighbour and the UE class that has been assigned to the UE. More specifically, the network broadcasts several sets of Cell Re-selection Parameters (CRP), that are identified with an index. In an embodiment of the invention, it is not the network that indicates which CRP set applies for a UE, e.g., by sending the corresponding index (upon cell re-selection there is no associated signalling). Instead, it is the UE that derives the index by performing a function/computation which takes the cell class and the UE class as input, i.e., as follows:

$$\text{CRP set index} = \text{Function (Neighbouring cell class, UE class)}$$

The cell class and the UE class may just be regarded as numbers, while the details of how they are assigned are entirely up to E-UTRAN implementation. This way the mechanism is both simple and flexible, i.e., the network operator can decide the exact usage.

Furthermore, the actual details of the abovementioned function, i.e., the rules which are to be used by the UE, are also signalled by the network. The E-UTRAN will indicate the details of this function by signalling the parameter 'Applicability information' or 'CRP applicability information'.

CRP set index is selected by the UE depending on the Neighbouring cell class, the UE class and CRP applicability information as provided by the network.

The following table shows a possible example of the use of model sketched in the above.

**Table 1: Example of a 'CRP applicability information'**

| Parameter set | Cell class | UE class | Description |
|---|---|---|---|
| 1 | 1 | any | Default parameter set for intra-frequency neighbours |
| 2 | 2 | any | Parameter set for intra-frequency neighbours with some special handling, e.g., a different offset or hysteresis (e.g., other TA) |
| 3 | 3 | 1 | Default parameter set for inter-frequency neighbours |
| 4 | 3 | 2 | Parameter set for inter-frequency neighbours preferred by UEs supporting high data rates |
| 4 | 4 | 1 | Default parameter set for inter-RAT neighbours |
| 5 | 21 | 2 | Parameter set for inter-RAT neighbours preferred by speech only UEs |

In summary, the basic idea is as follows:The neighbouring cell information includes one or more sets of cell re-selection parameters; The neighboring cell information includes CRP applicability information that specifies for which re-selection cases each set of parameters applies; andThe CRP applicability information is specified in terms of characteristics of the target cell, i.e., the (cell class) and the UE (i.e., the UE class) that a set of parameters is specified to be applicable for a specific combination of the class values of the target cell and UE;andthe cell class of the target cell could either be broadcast by the target cell or it could be broadcast by the source cell, i.e., as part of the neighbouring cell information.

As mentioned above, the benefit of the SFN transmission can be significant. It was also indicated that this mode of operation may be impossible to use in a conventional system because the majority of the neighbouring cell information is cell specific.

The present invention as described above in the previous basic idea allow the definition of more generic sets of cell re-selection parameters, e.g., one set for intra frequency cells, another set for inter frequency cells, etc. This approach facilitates that the cell re-selection parameters are specified independent of the cell in which they are transmitted. It should be possible to apply the SFN transmission for the sets of cell re-selection parameters.

The CRP applicability information as defined in the basic proposal, however, is specific to the source cell. It could be further generalized to facilitate the SFN transmission, by enhancing the basic invention slightly that each cell, including the source cell, broadcasts a cell class andthe CRP applicability information is specified in terms of characteristics of the source and the target cell, i.e., the (cell classes of source and target cell) and the UE (i.e., the UE class).

It should be noted that the order of the entries in the CRP applicability information may be significant, i.e., the rules associated with the first entry in the CRP applicability information may have to be performed prior to the rules associated with a following entry (see example below).

The following table shows a possible example of the use of model sketched in this section, assuming that the cell class is used as follows:

- Cell class 1: E-UTRA frequency f1
- Cell class 2: E-UTRA frequency f2
- Cell class 3: E-UTRA frequency f3
- Cell class 4: Inter RAT cell (UTRA, GSM)

**Table 2: Example of *common* CRP applicability information**

| Parameter set | Source cell class | Target cell class | UE class | Description |
|---|---|---|---|---|
| 1 | <>4 | 4 | 2 | Parameter set for inter-RAT neighbours preferred by speech only UEs |
| 2 | <>4 | 4 | any | Default parameter set for inter-RAT neighbours |
| 3 | any | different | 3 | Parameter set for inter-frequency neighbours preferred by UEs supporting high data rates |
| 4 | any | different | any | Default parameter set for inter-frequency neighbours |
| 5 | any | same | any | Default parameter set for intra-frequency neighbours |

With the above modifications, it is possible to specify the following information in a manner common for several cells (as needed for the SFN transmission):

- The sets of cell re-selection parameters
- The CRP applicability information

**BRIEF DESCIPTION OF THE DRAWINGS**

The above and other aspects, features and advantages of the present invention will become more apparent from the following detailed description when taken in conjunction with the accompanying drawings in which:

FIG. 1 shows the broadcasting of system information from an eNB to a UE;
FIG. 2 is a block diagram illustrating a wireless communication system according to the present invention;
FIG. 3 shows an example of a sell class implementation with separate fields;

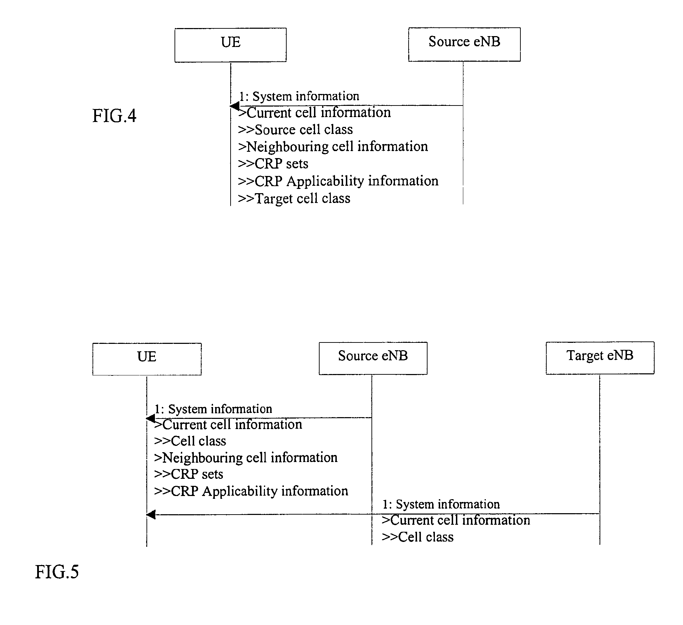

FIG. 4 shows the signalling by a source cell of an indication of a cell class for a target cell;
FIG. 5 shows the signalling by a target cell of an indication of a cell class for the target cell;
FIG. 6 shows UE class assignment upon connection establishment;
FIG. 7 shows UE class modification on TA update;
FIG. 8 shows UE information updating;
FIG. 9 shows an indication of a cell class to an eNB;
FIG. 10 shows an indication of UE class on connection establishment;
FIG. 11 shows an indication of a modified UE class to the eNB;
FIG. 12 shows a forwading of UE class information on handover;

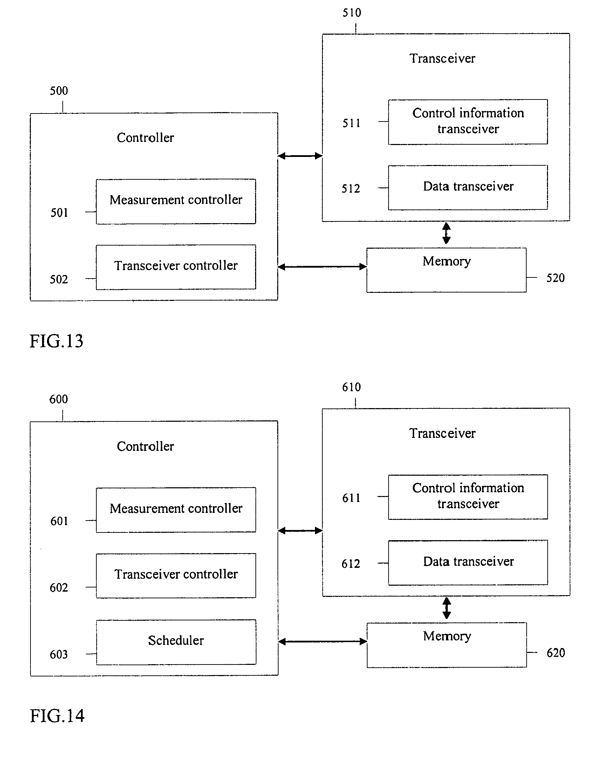

FIG. 13 is a block diagram showing the main components of a UE;
FIG. 14 is a block diagram showing the main components of an eNB;
FIG. 15 is a flow chart showing operations performed by the UE during cell re-selection; and
FIG. 16 is a flow chart showing operations performed by a Mobility Management Entity (MME) during setting and distribution of cell class.

**DETAILED DESCRIPTION**

Preferred embodiments of the present invention will now be described in detail with reference to the accompanying drawings. In the following description, a detailed description of known functions and configurations incorporated herein has been omitted for clarity and conciseness.

FIG. 2 illustrates the basic invention, focusing on the inputs of the UE function Select Cell Re-selection Parameter (CRP) set and from which network nodes the UE may obtain these inputs.

As mentioned before, the present invention leaves the details of the cell and UE classes entirely up to E-UTRAN implementation. This will make the mechanism simple and flexible so that the network operator can freely decide the exact usage and no standardization effort is required.

To allow the SFN transmission for the CRP applicability information, it needs to be specified in a generic manner that is independent of the cell in which it is transmitted. This may require that independent properties are reflected separately in the cell class by using separate fields. FIG. 3 shows an example of a cell class implementation with one field indicating the RAT & frequency and another one indicating specific radio characteristics (e.g., indoor, street corner).

As mentioned above, it is undesirable to specify the structures of the cell class parameter. However, it may be desirable for the "CRP application information" to specify rules that operate on one or more fields rather than on the entire "cell class". For example, when there is a change of RAT/ frequency, the Cell re-selection parameter set is determined only by the RAT/ frequency field.

In such a case, simple mathematical operands (e.g., =, < or >) on the cell class are deemed to be insufficient. It seems that more complicated operands are needed, for example;a logical AND is performed with a bit set to extract the bits of the field representing one property; anda mathematical operand is applied, e.g., to specify a condition for the specific field/ property, e.g., that it is larger than 0.

The present invention allows the use of multiple successive operands as shown above to avoid the need to specify the possible structures of the cell class parameter.

As mentioned above, it is important to ensure that the mobility behaviours in idle and connected mode are consistent. This can be achieved by re-using some of the key elements of the mechanism of the present invention also in connected mode. A natural consequence is that the same cell class and UE class information is also used to control the mobility in connected mode. This implies that the eNB that handles the mobility of connected mode UEs should be aware of the following information of the cell class of each possible target cell, i.e., of each neighbouring cell, and the UE class of each connected mode UE.

In case the cell class is provided by the source eNB as part of the neighbouring cell information, the eNB already needs to be aware of the cell class of each possible target. In this case, there are no additional requirements to support consistent handling in connected mode. The assumption is that the system information may be provided by Operation and Maintenance (O&M) as part of the eNB configuration management.

In case the cell class of neighbouring cells are not included in the source eNBs system information, it needs to be provided to the eNB to support a consistent connected mode behaviour. This information may be provided by O&M.

As mentioned above, it is assumed that the MME assigns the UE class. This means that, to support a connected mode behaviour consistent with the idle mode behaviour, the MME needs to provide the UE class to the eNB when the UE initially moves to connected mode and whenever the UE class is modified. Upon handover to another eNB, either the source eNB or the MME provides the information to the target eNB.

In E-UTRAN, the Core Network (CN) is not involved during handover preparation. Since UE context information is beneficial in this early phase of the handover, it is forwarded by the source eNB. It is assumed that for the same reasons, forwarding from source to target eNB is the most likely option.

In summary, enhancements of the present invention are as follows:

To facilitate the SFN transmission for the CRP applicability information, each cell, including the source cell, broadcasts a cell class, and the CRP applicability information is specified in terms of characteristics of the source and the target cell, i.e., the (cell classes of source and target cell) and the UE (i.e., the UE class);

To avoid that the standards needs to specify the possible structures of the cell class parameter while allowing different properties to be reflected in this parameter, the present invention allows the use of multiple successive operands in the CRP applicability information; andTo support a connected mode behaviour consistent with the idle mode behaviour, the eNB should be made aware of the cell class and the UE class; The cell class of each possible target, i.e., of each neighbouring cell may be provided by Operation and Maintenance (O&M), i.e., as part of the eNB configuration management; andthe MME provides the UE class to the eNB when the UE initially moves to connected mode and whenever the UE class is modified. Upon handover to another eNB, either the source eNB or the MME provides the UE class to the target eNB

FIG.s 4 and 5 illustrate the indication of the cell class to the UE, covering both the basic and the enhanced embodiments of the present invention (in which the source cell also indicates its cell class). The figures also illustrate the signalling of the cell re-selection parameters (CRP), i.e., both the sets and the CRP applicability information.

In the following, the different steps in the procedure are described in more detail.

The source eNB broadcasts the cell re-selection parameter information (i.e., the CRP sets and the CRP applicability information) as part of the neighbouring cell information. More specifically, the networkmay indicate the cell class of the source cell, e.g., to allow specification of generic CRP Applicability information (allowing the SFN transmission of this information) and may indicate the cell class of the possible target cells, e.g., to avoid that the UE needs to acquire this information from the target cell.

The UE applies the received cell class information when selecting the CRP set.

The following table provides a description of the possible contents of the concerned system information message. This message includes information related to idle and/ or connected mode mobility.

**Table 3: System information message contents**

| Information Element/Group name | Need | Multi | Description |
|---|---|---|---|
| Message Type | MP | | |
| Current cell information | MP | | |
| >Cell class | OP | | Provided to allow specification of generic CRP Applicability information (allowing the SFN transmission of this information) |
| Neighbouring cell information | MP | | |
| >Cell re-selection parameter sets | MP | | |
| >Applicability information | MP | | |
| >Neighbouring cell specific info | MP | Ncell | Neighbouring cell information that is specific/applicable for one cell, i.e., there is a list with one entry per neighbouring cell. In this case, for each neighbouring cell the Target cell class' is signalled (see next row). |
| >>Target cell class | OP | | Provided if not indicated by the target cell and/ or to avoid that the UE needs to acquire the information from the target cell |

This message includes information related to idle and/ or connected mode mobility.

Assignment of UE class (initial, modification)

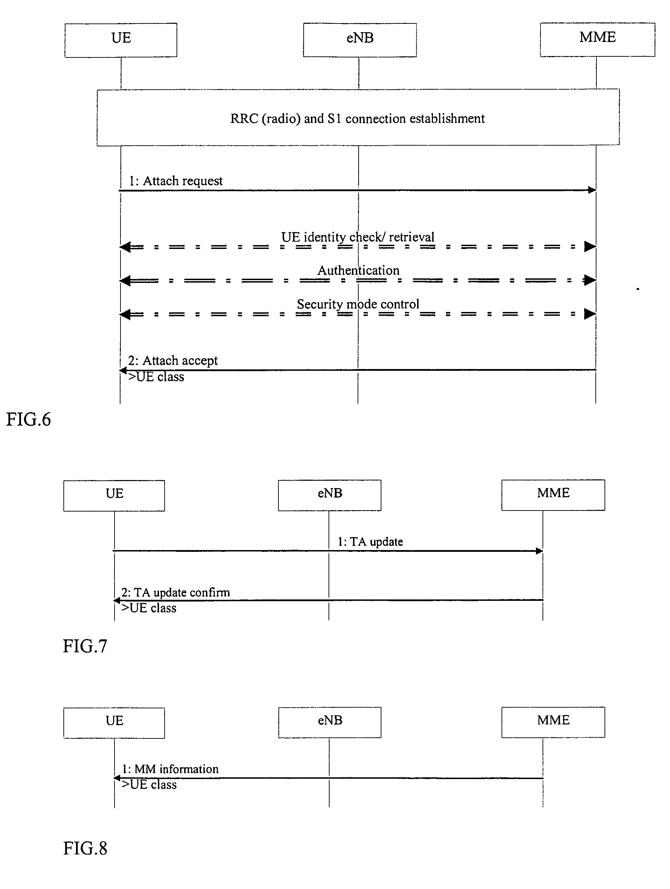

FIG. 6 illustrates the initial assignment of the UE class.

In the following, the different steps in the procedure are described in more detail. At first the RRC (radio) and SI- connection establishment procedure is performed.

1. The UE initiates the Attach procedure by sending the Attach request. The transfer of this Non-Access Stratum (NAS) information/ message may be combined with the transfer of the RRC/ radio connection request message. The MME may subsequently initiate the UE identity check/ retrieval, authentication and the security mode control procedures. The procedures are needed when the UE does not have a valid security context.

2. The MME completes the Attach procedure by returning the Attach accept message. The transfer of this NAS information/ message may be combined with the transfer of the RRC/ radio connection setup message. More specifically, the MMEmay indicate the assigned UE class in the Attach accept.

In the procedure described in the above, the UE class is indicated in the Attach accept. However, the names and functionality of the NAS messages used in E-UTRAN/ SAE have not been decided yet. The UE class information may also be included in another NAS message that is exchanged during the (initial) connection establishment procedure.

FIG. 7 illustrates the modification of the UE class upon TA update.

There may be a need for the MME to update the UE class in other cases. To accommodate this need, the present invention provides that the UE class is also included in a dedicated message that the MME can send, i.e., a message that is not preceded by a request from the UE, such as a general MM information type of message. FIG. 8 illustrates the MM **(Mobility Management)** information message_

The UE applies the received UE class information when selecting the CRP set.

The following table provides a description of the possible contents of the messages affected by this proposal i.e. the Attach accept of the present invention.

The ATTACH ACCEPT message is sent by the network in response to an ATTACH REQUEST. Herein, MP indicates Mandatory Present, and OP indicates Optional

**Table 4: Attach accept message contents**

| Information Element/Group name | Need | Multi | Description |
|---|---|---|---|
| Message Type | MP | | |
| Attach result | MP | | |
| Periodic TA update timer | MP | | |
| TA identity | MP | | |
| UE class | OP | | |

A Tracking Area (TA) UPDATE CONFIRM message is sent by the network in response to a TA UPDATE REQUEST.

**Table 5: TA Update Confirm message contents**

| Information Element/Group name | Need | Multi | Description |
|---|---|---|---|
| Message Type | MP | | |
| Update result | MP | | |
| Periodic TA update timer | MP | | |
| TA identity | MP | | |
| UE class | OP | | |

An MM INFORMATION message is sent by the network to update information in the UE.

**Table 6: MM information contents**

| Information Element/Group name | Need | Multi | Description |
|---|---|---|---|
| Message Type | MP | | |
| UE class | OP | | |

Indication of cell class to eNB

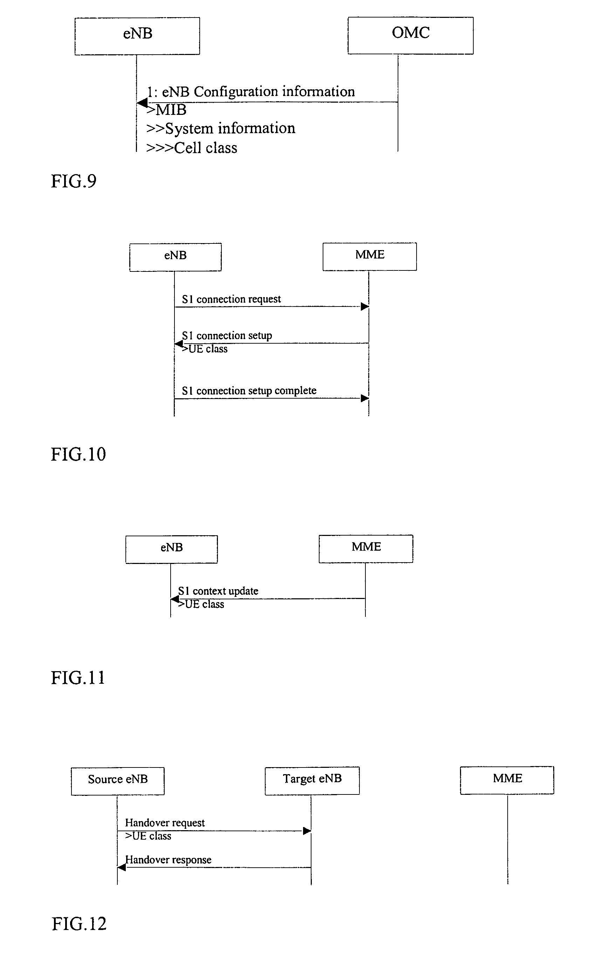

Just like other system information, the cell class is provided by an Operation and Maintenance Centre (OMC) as part of the eNB configuration management. This is illustrated in FIG. 9.
The cell class is assumed to be an additional parameter in the eNBs Management Information Base (MIB). Hence, no message description needs to be provided.The eNB broadcasts the received cell class parameter.

The UE class is provided by the MME to the eNB upon connection establishment.This is illustrated in FIG. 10.

There may be a need for the MME to update the UE class in other cases. To accommodate this, the present invention provides that the UE class is also be included in a dedicated message that the MME can send, i.e., a message that is not preceded by a request from the eNB, e.g., a general S1 context update type of message. This is illustrated in FIG. 11.

In case of a handover, the UE class is transferred from the source eNB to the target eNB, as currently provided for other UE context information. FIG. 12 illustrates this approach.

The eNB stores the UE class information with the UE context, and forwards it to the target eNB upon handover.

The following table provides a description of the possible contents of the messages affected by this proposal of the Attach accept.

An S1 CONNECTION SETUP message is send by the network in response to an S1 CONNECTION REQUEST.

**Table 7: S1 Connection Setup message contents**

| Information Element/Group name | Need | Multi | Description |
|---|---|---|---|
| Message Type | MP | | |
| UE identity | MP | | |
| UE class | OP | | |

An S 1 CONTEXT UPDATE message is sent by the network to update the context of a connected mode UE in the eNB.

**Table 8: S1 Context Update message contents**

| Information Element/Group name | Need | Multi | Description |
|---|---|---|---|
| Message Type | MP | | |
| UE context | MP | | |
| >UE class | OP | | |

A HANDOVER REQUEST message is sent by the source eNB to request the target eNB to prepare for an upcoming handover.

**Table 9: Handover request message contents**

| Information Element/Group name | eed | ulti | Description |
|---|---|---|---|
| Message Type | MP | | |
| UE identity | MP | | |
| SAE bearer attributes | MP | | Including the Label |
| AS configuration information | MP | | The use of this information is FFS |
| UE capabilities | | | |
| UE class | OP | | |

FIG.s 13 and 14 show block diagrams respectively illustrating the main components of the UE and the eNB that are relevant to the present invention of the present invention.

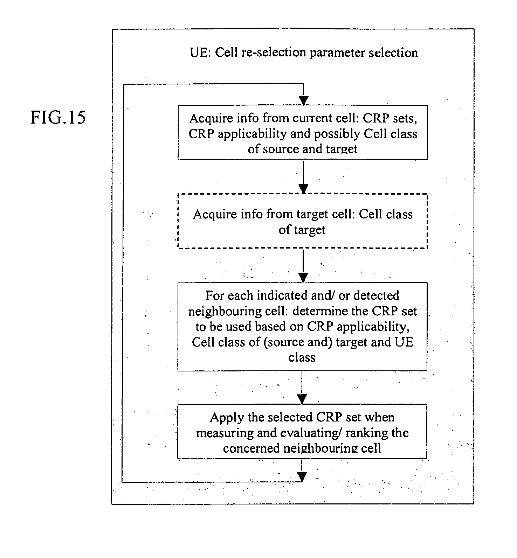

FIG. 15 shows a flow chart, which illustrates the proposed/ affected UE behaviour.

The UE behaviour can be described as follows (not necessarily in that order):

1. The UE acquires the following neighbouring cell information from the source cell (i.e., the CRP sets and the CRP applicability information) and optionally from the cell class of the source cell and of the target cell. Alternatively, the UE may acquire the cell class of the target cell from the neighbouring cell information of the target cell;

2. The UE receives the UE class from the MME and stores the last received value in its memory;

3. Whenever the UE detects a neighbouring cell or considers it for cell re-selection, it determines the CRP set that applies for this neighbouring cell as follows:

- The UE determines the index that identifies the CRP set using a function/ algorithm/ computation;
- The function/ algorithm/ computation applies the following inputs: the UE class, the cell class of the neighbouring cell and possibly the cell class of the source cell:
  CRP set index= Function (UE class, Neighbouring cell class, *Source cell class);* and
- The function/ algorithm/ computation that the UE uses is determined by the network, which signals it by means of the CRP applicability information parameter; and

4. The UE applies the CRP set determined by the above function/ algorithm/ computation when evaluating and/ or ranking the neighbouring cell as a possible candidate for cell re-selection.

For the eNB, there is no real change of procedures. The eNB only needs to handle additional parameters in the UE and the cell class. More specifically, the eNB just broadcasts an additional UE class parameter and stores an additional UE context parameter that it forwards to the target upon handover. Hence, no flow chart is provided for the eNB.

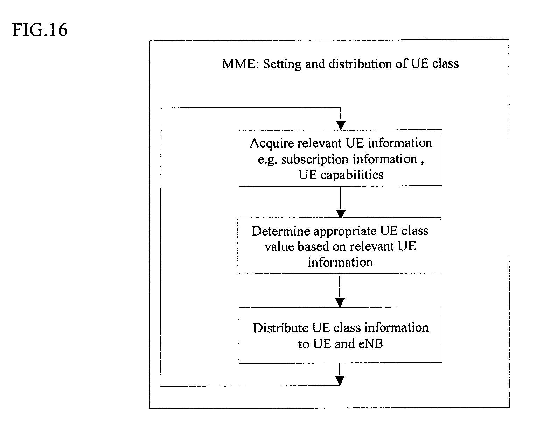

FIG. 16 shows a flow chart which illustrates the proposed/ affected MME behaviour of the present invention.

The methods disclosed in the present invention are applicable whenever neighbouring cell information including cell re-selection parameters is configured. They are independent of whether the neighbouring cell information includes an entry/ identity of each neighbouring cell to be considered by the UE and may be used in both idle mode and connected mode.

The present invention can be applied to other systems, such as an HSPA(High-Speed Packet Access)_evolution, where the methods can be used for the neighbouring cell information for E-UTRA cells as provided in other RATs. However, due to backwards compatibility problems with legacy mobiles, it may be difficult to apply the methods of the present invention to replace neighbouring cell information for legacy cells as provided in legacy RATs.

While the invention has been shown and described with reference to a certain preferred embodiment thereof, it will be understood by those skilled in the art that various changes in form and details may be made therein without departing from the spirit and scope of the invention as defined by the appended claims.

**Claims**

1.  A wireless communication system, comprising a transmitter for transmitting neighboring cell information by a network to a mobile station, wherein the neighboring cell information includes sets of parameters, each set of parameters being applicable to several neighbouring cells.

2.  The wireless communication system in claim 1, wherein the neighbouring cell information further includes applicability information which specifies rules the mobile station is to apply to determine which parameter set is applicable for a particular neighboring cell.

3.  The wireless communication system in claim 2, wherein the applicability information is specified in terms of a cell class associated with the neighbouring cell and a mobile station class associated with the mobile station.

4.  The wireless communication system in claim 2, wherein the applicability information is specified in terms of a cell class of a source cell.

5.  The wireless communication system in claim 3, wherein the cell class for a neighbouring cell is broadcast by that neighbouring cell.

6.  The wireless communication system in claim 3, wherein the cell class for a neighbouring cell is broadcast by a source cell.

7.  The wireless communication system in claim 3, wherein the network is operable to assign a mobile station class to the mobile station upon initial transition from a detach state to an active state.

8.  The wireless communication system in claim 1, wherein the network is operable to broadcast the neighbouring cell information simultaneously from a plurality of base stations.

9.  The wireless communication system in claim 2, wherein the applicability information includes multiple successive operands.

10.  The wireless communication system in claim 1, wherein the network is operable to advise a base station associated with a source cell of a cell class of a neighbouring cell and a mobile station class, and wherein the base station associated with the source cell is operable to determine the parameter set which is applicable to a particular neighbouring cell.

11.  The wireless communication system in claim 1, wherein a mobile station determines which parameter set is applicable to a particular neighbouring cell in an idle mode, and a base station associated with a source cell determines which parameter set is applicable to the particular neighbouring cell in a connected mode.

12.  A mobile station for a wireless communication system, the mobile station being operable to communicate with a wireless network, wherein the mobile station comprising to receive neighbouring cell information including sets of parameters and to determine which set of parameters is applicable to a particular neighbouring cell.

13. The mobile station in claim 12, wherein the neighbouring cell information includes applicability information which specifies rules the mobile station is to apply to determine which parameter set is applicable for a particular neighbouring cell.

14. The mobile station in claim 13, wherein the applicability information is specified in terms of a cell class associated with a neighbouring cell and a mobile station class associated with the mobile station.

15. The mobile station in claim 13, wherein the applicability information is specified in terms of a cell class of a source cell.

16. The mobile station according to claim 14, wherein the mobile station is operable to receive a cell class for a neighbouring cell from that neighbouring cell.

17. The mobile station in claim 14, wherein the mobile station is operable to receive a cell class for a neighbouring cell from the source cell.

18. The mobile station in claim 14, wherein the mobile station is operable to receive a mobile station class for the mobile station from the wireless network.

19. The mobile station in claim 13, wherein the applicability information includes multiple successive operands.

20. A wireless network operable to communicate with a plurality of mobile stations the wireless network comprising transmission means to transmit neighbouring cell information to a mobile station, the neighbouring cell information including sets of parameters with each set of parameters being applicable to several neighbouring cells.

21. The wireless network in claim 20, wherein the neighbouring cell information includes applicability information which specifies the rules a mobile station is to apply to determine which parameter set is applicable for a particular neighbouring cell.

22. The wireless network in claim 21, wherein the applicability information is specified in terms of a cell class associated with the neighbouring cell and a mobile station class associated with the mobile station.

23. The wireless network in claim 21, wherein the applicability information is specified in terms of a cell class of a source cell.

24. The wireless network in claim 22, wherein the wireless network is arranged so that a base station associated with a neighbouring cell broadcasts a cell class for that neighbouring cell.

25. The wireless network in claim 22, wherein the wireless network is arranged so that a base station associated with a source cell broadcasts a cell class for a neighbouring cell.

26. The wireless network in any of claim 22, wherein the wireless network is arranged to assign a mobile station class to the mobile station upon initial transition from a detach state to an active state.

27. The wireless network in claim 20, wherein the wireless network is operable to broadcast the neighbouring cell information simultaneously from a plurality of base stations.

28. The wireless network in claim 21, wherein the applicability information includes multiple successive operands.

29. The wireless network in any of claims 20, wherein the wireless network is arranged to advise a base station associated with a source cell of a cell class and a mobile station class, whereby the base station associated with the source cell is operable to determine the parameter set which is applicable to a particular neighbouring cell.

30. The wireless network in claim 29, the wireless network being arranged such that a base station associated with a source cell determines which parameter set is applicable to a particular neighbouring cell in a connected mode.

```
┌─────────────────────────┐          ┌─────────────────────────┐
│            UE           │          │           eNB           │
└─────────────────────────┘          └─────────────────────────┘
            │                                      │
            │ 1: System information                │
            ◄──────────────────────────────────────
            │ >Neighbouring cell information        │
            │ >>Intra frequency cell list           │
            │ >>Inter frequency cell list           │
            │ >>Inter RAT cell list                 │
            │                                       │
```

FIG.1

Source eNB          Target eNB               MME

CRP sets
Applicability info      Target cell class        UE class

UE          Select CRP set

FIG. 2

| 1 | 2 | 3 | 4 | 5 | 6 | 7 | 8 |
|---|---|---|---|---|---|---|---|
| RAT/ frequency | | | | Radio char. | | | |

FIG. 3

FIG.4

```
┌──────────────────┐                    ┌──────────────────┐
│        UE        │                    │    Source eNB    │
└──────────────────┘                    └──────────────────┘
         │                                       │
         │  1: System information                │
         ◄───────────────────────────────────────┤
         │  >Current cell information            │
         │  >>Source cell class                  │
         │  >Neighbouring cell information       │
         │  >>CRP sets                           │
         │  >>CRP Applicability information      │
         │  >>Target cell class                  │
```

```
┌──────────────┐          ┌──────────────┐          ┌──────────────┐
│      UE      │          │  Source eNB  │          │  Target eNB  │
└──────────────┘          └──────────────┘          └──────────────┘
       │                         │                         │
       │  1: System information  │                         │
       ◄─────────────────────────┤                         │
       │  >Current cell information                        │
       │  >>Cell class                                     │
       │  >Neighbouring cell information                   │
       │  >>CRP sets                                       │
       │  >>CRP Applicability information                  │
       │                         │  1: System information  │
       ◄─────────────────────────┼─────────────────────────┤
       │                         │  >Current cell information
       │                         │  >>Cell class           │
```

FIG.5

| UE | | eNB | | MME |
|---|---|---|---|---|

RRC (radio) and S1 connection establishment

1: Attach request

UE identity check/ retrieval

Authentication

Security mode control

2: Attach accept
>UE class

FIG.6

| UE | | eNB | | MME |
|---|---|---|---|---|

1: TA update

2: TA update confirm
>UE class

FIG.7

| UE | | eNB | | MME |
|---|---|---|---|---|

1: MM information
>UE class

FIG.8

```
          ┌──────────────┐                    ┌──────────────┐
          │     eNB      │                    │     OMC      │
          └──────────────┘                    └──────────────┘
                 │                                    │
                 │ 1: eNB Configuration information   │
                 │◄───────────────────────────────────│
                 │ >MIB                               │
                 │ >>System information               │
                 │ >>>Cell class                      │
```

FIG.9

```
          ┌──────────────┐                    ┌──────────────┐
          │     eNB      │                    │     MME      │
          └──────────────┘                    └──────────────┘
                 │                                    │
                 │    S1 connection request           │
                 │───────────────────────────────────►│
                 │                                    │
                 │    S1 connection setup             │
                 │◄───────────────────────────────────│
                 │    >UE class                       │
                 │                                    │
                 │    S1 connection setup complete    │
                 │───────────────────────────────────►│
                 │                                    │
```

FIG.10

```
          ┌──────────────┐                    ┌──────────────┐
          │     eNB      │                    │     MME      │
          └──────────────┘                    └──────────────┘
                 │                                    │
                 │    S1 context update               │
                 │◄───────────────────────────────────│
                 │    >UE class                       │
```

FIG.11

```
  ┌──────────────┐        ┌──────────────┐        ┌──────────────┐
  │  Source eNB  │        │  Target eNB  │        │     MME      │
  └──────────────┘        └──────────────┘        └──────────────┘
         │                       │                       │
         │  Handover request     │                       │
         │──────────────────────►│                       │
         │  >UE class            │                       │
         │  Handover response    │                       │
         │◄──────────────────────│                       │
         │                       │                       │
```

FIG.12

16

FIG.13

FIG.14

FIG.15

UE: Cell re-selection parameter selection

Acquire info from current cell: CRP sets,
CRP applicability and possibly Cell class
of source and target

Acquire info from target cell: Cell class
of target

For each indicated and/ or detected
neighbouring cell: determine the CRP set
to be used based on CRP applicability,
Cell class of (source and) target and UE
class

Apply the selected CRP set when
measuring and evaluating/ ranking the
concerned neighbouring cell

FIG.16

MME: Setting and distribution of UE class

Acquire relevant UE information
e.g. subscription information ,
UE capabilities

Determine appropriate UE class
value based on relevant UE
information

Distribute UE class information
to UE and eNB

**European Patent Office**

**EUROPEAN SEARCH REPORT**

Application Number

EP 08 00 0402

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAMSUNG: "Neighbouring cell information" 3GPP TSG-RAN WG2 MEETING #56BIS, R2-070167, 9 January 2007 (2007-01-09), pages 1-3, XP002481650 Sorrento, Italy, 15-19 January 2007 Retrieved from the Internet: URL:www.3gpp.org> * the whole document * ----- | 1-30 | INV. H04Q7/38 |
| X<br>A | EP 1 686 827 A (SAMSUNG ELECTRONICS CO LTD [KR]) 2 August 2006 (2006-08-02) * abstract *<br><br>* paragraphs [0002] - [0009], [0019] - [0024] * ----- | 1,12,20<br><br>2-11,<br>13-19,<br>21-30 | |
| A,D | ERICSSON: "Reduction of neighbour cell list information sent to UE" 3GPP TSG-RAN WG2 MEETING #56, R2-063305, 31 October 2006 (2006-10-31), pages 1-5, XP002481651 Riga, Latvia, 6-10 Nov 2006 Retrieved from the Internet: URL:www.3gpp.org> * the whole document * ----- | 1-30 | TECHNICAL FIELDS SEARCHED (IPC)<br><br>H04Q |

The present search report has been drawn up for all claims

| Place of search | Date of completion of the search | Examiner |
|---|---|---|
| Munich | 27 May 2008 | Isopescu, Ciprian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 00 0402

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2008

| Patent document cited in search report | | Publication date | Patent family member(s) | | Publication date |
|---|---|---|---|---|---|
| EP 1686827 | A | 02-08-2006 | KR 20060087043 | A | 02-08-2006 |
| | | | US 2006166694 | A1 | 27-07-2006 |

EPO FORM P0459

For more details about this annex : see Official Journal of the European Patent Office, No. 12/82